Europäisches Patentamt

European Patent Office

Office européen des brevets

(11) Numéro de publication: **0 263 003**
**B1**

(12) **FASCICULE DE BREVET EUROPEEN**

(45) Date de publication du fascicule du brevet:
05.12.90

(51) Int. Cl.⁵: **B60N 2/10**

(21) Numéro de dépôt: **87401975.5**

(22) Date de dépôt: **03.09.87**

(54) Dispositif d'articulation permettant le débrayage sur une certaine valeur angulaire autorisant un grand déplacement du dossier sur l'assise du siège.

(30) Priorité: **12.09.86 FR 8612795**

(43) Date de publication de la demande:
**06.04.88 Bulletin 88/14**

(45) Mention de la délivrance du brevet:
**05.12.90 Bulletin 90/49**

(84) Etats contractants désignés:
**AT BE CH DE ES GB GR IT LI LU NL SE**

(56) Documents cités:
**EP-A- 0 023 863**
**FR-A- 2 071 277**
**FR-A- 2 231 538**

(73) Titulaire: **A. & M. COUSIN Etablissements COUSIN FRERES, Le Bois de Flers, F-61103 Flers Cédex Orne(FR)**

(72) Inventeur: **Pipon, Yves, "La Garenne",
F-61100 St-Georges-des-Groseillers(FR)**
Inventeur: **Droulon, Yves, "La Garenne",
F-61100 St-Georges-des-Groseillers(FR)**

(74) Mandataire: **Coester, Jacques Charles et al, Cabinet Madeuf 3, avenue Bugeaud, F-75116 Paris(FR)**

**Description**

On connaît depuis longtemps des articulations, permettant le réglage de la position angulaire du dossier de siège par rapport à l'assise de ce dernier, qui comportent, solidaire de l'assise, un flasque terminé à sa partie supérieure par une couronne dentée circulaire qui coopère avec au moins un grain sinon plusieurs grains commandés par une came pour bloquer un flasque mobile solidaire de l'armature du dossier du siège.

Dans tous les cas, un gros ressort tend à ramener le dossier du siège sur le dos de l'utilisateur et, bien souvent, chaque siège est muni de deux articulations placées de chaque côté du dossier avec une commande unique réalisée par un bouton permettant le rotation d'un arbre placé entre les deux articulations, arbre supportant les deux commandes destinées au blocage du ou des grains de chaque articulation.

Il est également connu de remplacer le bouton de manœuvre par un levier de manœuvre qui est rappelé par un ressort de façon à ramener le ou les cames dans la position où celles-ci repoussent les grains placés dans des alvéoles prévues sur la face interne de chaque flasque mobile contre la denture circulaire fixe du ou des flasques solidaires de l'assise du dossier.

Jusqu'à présent, lorsque l'on utilisait ces dispositifs sur des sièges de véhicule à deux portes, on était amené à compléter chaque articulation par un dispositif permettant le débrayage temporaire d'une partie de l'articulation afin de rabattre complètement, sous l'action du gros ressort de rappel du dossier, ce dernier sur l'assise afin de dégager un passage permettant, aux personnes assises à l'arrière du véhicule, de sortir par l'une des deux portes de celui-ci.

La présente invention se rapporte à ce type d'articulation pour véhicule à deux portes mais en assurant un fonctionnement beaucoup plus aisé d'articulation afin de rabattre, d'une manière rapide et sûre lorsque l'on désire dégager les places arrières, le ou les dossiers de siège avant,

Dans ces dispositifs connus antérieurement, le ressort de rappel du levier de commande a toujours tendance à déverrouiller le mécanisme. Or, dans la présente invention, le ressort de rappel du levier n'est plus fixé sur le flasque fixe mais sur le flasque mobile afin que la position du ressort de rappel se déplace angulairement suivant la rotation du flasque mobile.

De ce fait, il est concevable qu'à un moment donné la tension, qui était dans le sens de verrouillage, passe le point mort constitué par le point de l'axe de rotation du levier de commande et, de ce fait, la tension exercée par ce ressort de rappel devient effective dans le sens de déverrouillage de l'articulation.

Conformément à l'invention, le dispositif d'articulation permettant le débrayage sur une certaine valeur angulaire autorisant un grand débattement du dossier sur l'assise du siège, dans lequel de manière connue le flasque fixe comporte extérieurement des cavités disposées à 120° les unes des autres, ces cavités contenant des grains dentés repoussés par une came montée sur un arbre dont la rotation est assurée par un levier, puis des grains coopèrent avec un contour denté circulaire prévu à la partie inférieure circulaire concentrique à l'arbre du flasque mobile fixé sur l'armature du dossier du siège, est caractérisé en ce que l'arbre porte à son extrémité intérieure une étoile présentant d'une part, un axe servant de point de fixation à l'une des extrémités d'un ressort dont l'autre extrémité est fixée sur un pion désaxé du flasque mobile et d'autre part, deux taquets guident l'étoile sur le pourtour des zones de jonction de cavités et en ce que le ressort peut prendre des positions stables de verrouillage et de déverrouillage du dispositif d'articulation respectivement de part et d'autre d'une position instable correspondant à l'alignement des trois points constitués par l'axe, le pion désaxé et l'arbre, ce dernier étant compris entre les points (axe et pion désaxé) de fixation du ressort.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation latérale de l'articulation dans la position de verrouillage.

La fig. 2 montre l'articulation en position déverrouillée.

La fig. 3 est une élévation de face de l'articulation déverrouillée suivant la fig. 2.

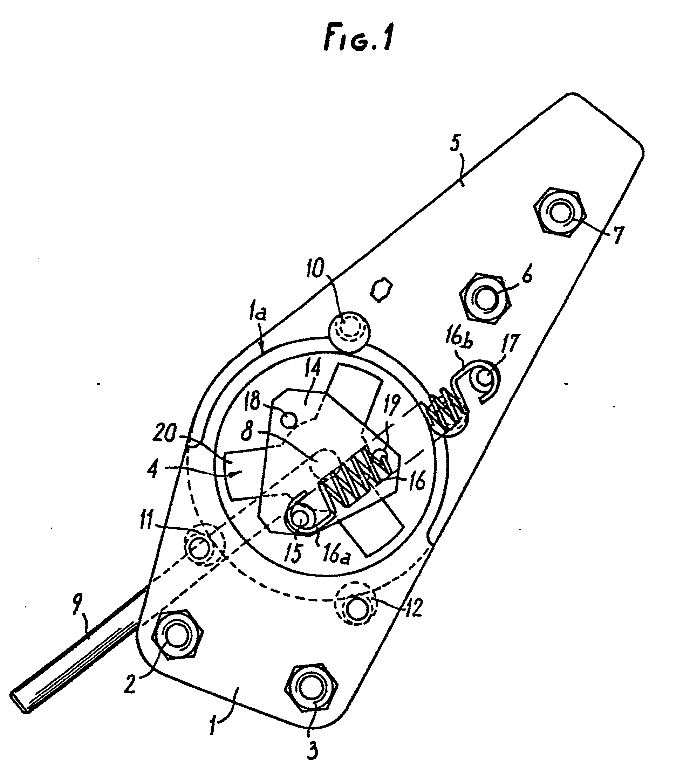

A la fig. 1, le flasque inférieur 1 est fixé par tous moyens convenables aux points 2 et 3 sur l'armature de l'assise du siège.

La partie supérieure circulaire 1a du flasque 1 comporte intérieurement, dans le cas présent, trois grains logés dans des cavités 4 prévues dans la face intérieure du flasque fixe 1 et disposées à 120° les unes des autres.

Les grains placés dans les cavités 4 sont repoussés par une came à trois points montée solidaire de l'arbre 8 qui, dans le cas présent, est prolongée par un levier 9.

Le flasque mobile 5 fixé par les points 6 et 7 sur l'armature du dossier du siège comporte à sa partie inférieure circulaire 5a une denture circulaire destinée à coopérer avec la denture des trois grains logés dans les cavités 4 du flasque fixe 1.

Dans la position verrouillée, la denture, prévue à la partie supérieure de chaque grain, pénètre dans la denture circulaire de la partie inférieure 5a du flasque 5 en verrouillant ainsi le flasque mobile 5 par rapport au flasque fixe 1.

Il est à noter que des pions 10, 11, 12 permettent de maintenir, d'une manière connue en soi, le flasque mobile 5 sur la partie supérieure circulaire 1a du flasque fixe 1.

De plus, dans le cas présent, l'arbre 8 porte, sur le côté intérieur de l'articulation, une étoile 14 à trois branches dont l'une des branches présente un axe 15 sur lequel est fixée l'extrémité 16a d'un ressort 16 fixé à son autre extrémité 16b sur un pion désaxé 17 solidaire de la partie médiane du flasque mobile 5.

Finalement, l'étoile 14 comporte sur ses deux autres branches des taquets circulaires 18, 19 qui glissent sur les parties arrondies de l'embouti à trois branches formées par les cavités 4 contenant les grains de blocage de l'articulation et obtiennent l'arrêt de l'étoile 14.

Normalement, lorsque le dossier est dans la position choisie par le passager, le ressort 16 occupe la position représentée à la fig. 1 et sa tension fait que, par l'intermédiaire de l'étoile 14, il tend à bloquer l'articulation en faisant pivoter la came qui repousse les grains mobiles logés dans le flasque fixe 1 vers la denture circulaire du flasque mobile 5.

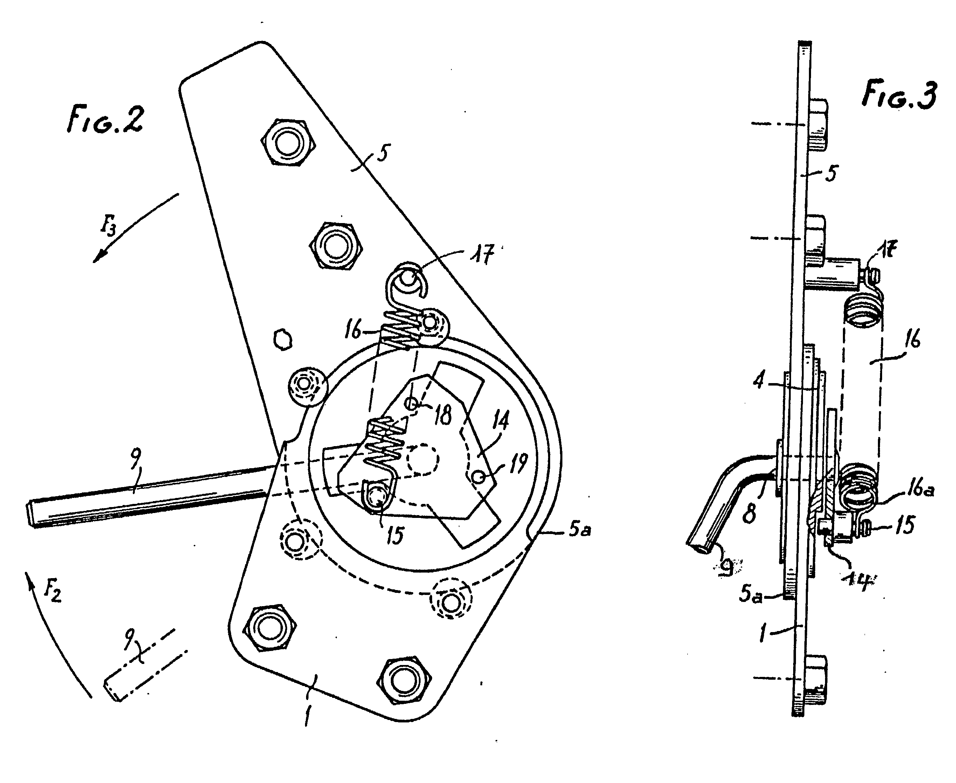

Lorsque l'on soulève dans le sens de la flèche F2 voir fig. 2) le levier 9, la came de blocage des grains tourne simultanément avec l'étoile 14 qui tend le ressort 16 et permet ainsi au mécanisme le déverrouillage et sous l'action du ou des ressorts, (non représentés), de rappel, le dossier est entraîné vers l'assise et lorsque au-delà de l'alignement des trois points 15-8-17, le ressort 16 tend toujours à lever suivant la flèche F2 le levier 9, ce qui poursuit sans aucun effort le déverrouillage du mécanisme de blocage. Le débattement vers l'avant du dossier permet ainsi un passage entre le siège et le montant de la porte pour les passagers utilisant les places arrière du véhicule.

Lorsque l'on désire ramener le dossier à sa position première, l'utilisateur repousse le dossier vers l'arrière, le ressort 16 tend jusqu'à l'alignement des trois points 15, 8, 17 à laisser le mécanisme déverrouillé. Au-delà de cet alignement, le ressort 16 reprend son droit de verrouiller le mécanisme et de baisser le levier 9 en sens contraire à la flèche F2 (voir fig. 2). L'utilisateur doit ensuite choisir dans la multitude des positions de verrouillage sa meilleure position d'utilisation.

## Revendications

Dispositif d'articulation permettant le débrayage sur une certaine valeur angulaire autorisant un grand débattement du dossier sur l'assise du siège, dans lequel le flasque fixe (1) comporte extérieurement des cavités (4) disposées à 120° les unes des autres, ces cavités contenant des grains dentés repoussés par une came montée sur un arbre (8) dont la rotation est assurée par un levier (9) puis des grains coopèrent avec un contour denté circulaire prévu à la partie inférieure circulaire concentrique à l'arbre (8) du flasque mobile (5) fixé sur l'armature du dossier du siège, caractérisé en ce que l'arbre (8) porte à son extrémité intérieure une étoile (14) présentant d'une part, un axe (15) servant de point de fixation à l'une des extrémités d'un ressort (16) dont l'autre extrémité est fixée sur un pion désaxé (17) du flasque mobile (5) et d'autre part, deux taquets (18, 19) guident l'étoile (14) sur le pourtour des zones de jonction de cavités (4) et en ce que le ressort (16) peut prendre des positions stables de verrouillage et de déverrouillage du dispositif d'articulation respectivement de part et d'autre d'une position instable correspondant à l'alignement des trois points constitués par l'axe (15), le pion désaxé (17) et l'arbre (8), ce dernier étant compris entre les points (15 et 17) (axe (15) et pion désaxé (17)) de fixation du ressort.

## Patentansprüche

Gelenk, das eine Entkupplung über einen bestimmten Winkelwert ermöglicht und eine große Verstellung der Rückenlehne gegenüber der Sitzfläche eines Sitzes zuläßt, bei dem der feststehende Flansch (1) auf der Außenseite mit 120° voneinander beabstandete Vertiefungen (4) aufweist, die verzahnte Klinken enthalten, welche von einer Kurvenscheibe zurückgedrängt sind, die auf einer Welle (8) angeordnet ist, deren Drehung mit einem Hebel (9) vorgenommen wird, und weiter Klinken, die mit einer kreisrunden, verzahnten Kontur zusammenwirken, welche auf dem zur Welle (8) konzentrischen kreisrunden unteren Abschnitt des auf dem Rahmen der Sitzrückenlehne befestigten beweglichen Flansches (5) vorgesehen ist, dadurch gekennzeichnet, daß die Welle (8) auf ihrem unteren Endstück einen Stern (14) trägt, der einerseits einen Bolzen (15) als Befestigungspunkt für eines der Enden einer Feder (16), deren anderes Ende an einem achsversetzten Zapfen (17) des beweglichen Flansches (5) befestigt ist, und andererseits zwei Anschläge (18, 19) aufweist, die den Stern (14) auf dem Außenumfang der Verbindungsbereiche der Vertiefungen (4) führen, und daß die Feder (16) stabile Stellungen zur Verriegelung und Entriegelung des Gelenkes auf der einen bzw. der anderen Seite einer instabilen Stellung einnehmen kann, die der fluchtenden Ausrichtung der drei Stellen entspricht, die von dem Bolzen (15), dem achsversetzten Zapfen (17) und der Welle (8) gebildet sind, wobei letztere zwischen den Stellen (15 und 17) (Bolzen (15) und achsversetzter Zapfen (17)) der Federbefestigung angeordnet ist.

## Claims

Articulation device enabling the unclutching on a given angular magnitude authorizing a great angular movement of the back portion with respect to the seating portion of the seat, in which the fixed flange (1) outerly comprises recesses (4) placed at 120° the one from the other, these recesses containing toothed bearing plates pushed by a cam mounted on a shaft (8) the rotation of which is provided by a lever (9), then these bearing plates cooperate with a circular toothed periphery provided at the circular lower part which is concentrical to the shaft (8) of the mobile flange (5) fixed on the frame of the backing portion of the seat, characterized in that the shaft (8) carries, at its inner end, a star member (14) having, on the one hand, a pin (15) used as fixation point for one of the ends of a spring (16) the other end of which is fixed on an eccentric stud (17) of the mobile flange (5) and, on the other hand, two blocks (18, 19) guide the star member (14) on the periphery of the junction areas of the recesses (4), and in that the spring (16) can take stable locking and unlocking positions of the articulation device respectively on both sides of an unstable position corresponding to alignment of the three points formed by the pin (15), the eccentric stud (17) and the shaft (8), the later being comprised between the fixation points (15 and 17) (pin (15) and eccentric stud (17)) of the spring.

# FIG.1

FIG.2

FIG.3

EP 0 263 003 B1